# EUROPEAN PATENT APPLICATION

(11) **EP 3 190 543 A1**
(43) Date of publication of application: **12.07.2017**
(21) Application number: 16151798.2
(22) Date of filing: 19.01.2016
(51) Int. Cl.: G06K 9/00, G06K 9/60, G06F 21/32, H04L 29/06, G06F 21/60, H04L 9/32

(54) **METHOD OF DYNAMICALLY ENCRYPTING FINGERPRINT DATA AND RELATED FINGERPRINT SENSOR**

(30) Priority: 06.01.2016 US 201614989777
(71) Applicant: eMemory Technology Inc., Hsin-Chu 30075 (TW)
(72) Inventor: Liu, Hsin-Chou, Kaohsiung City 825 (TW); Wang, Hung-Hsiang, Hsinchu County 308 (TW)
(74) Representative: Straus, Alexander

(57) **Abstract**

A dynamic encryption type fingerprint sensor (30) includes a capacitive array (38) sensing fingerprints and producing fingerprint data, an embedded non-volatile memory (eNVM) (34) storing a one-time code (OTC) (72) and an encryption algorithm indicator (74), and a logic algorithm circuit (32) encrypting the fingerprint data produced by the capacitive array (38) according to the OTC (72) and the encryption algorithm indicator (74). The logic algorithm circuit (32) includes an encryption circuit (50) having a plurality of logic encryption circuits (52,54) selected using the encryption algorithm indicator (74), the encryption circuit (50) encrypting the fingerprint data using selected logic encryption circuits (52,54) of the plurality of logic encryption circuits according to the OTC (72). A control circuit (36) is used for controlling operation of the capacitive array (38), the eNVM (34), and the logic algorithm circuit (32).

## Description

### Field of the Invention

The invention relates to a fingerprint sensor, and more particularly, to a fingerprint sensor that dynamically selects an encryption type and encrypts fingerprint data using a one-time code (OTC).

### Background of the Invention

Fingerprint sensors are used to sense fingerprint data and send the fingerprint to a processor, such as an application processor or a microcontroller unit (MCU). Currently the way that sensed fingerprint data is transferred from the fingerprint sensor to the processor cannot safely protect the fingerprint data from being read and misused by unauthorized parties.

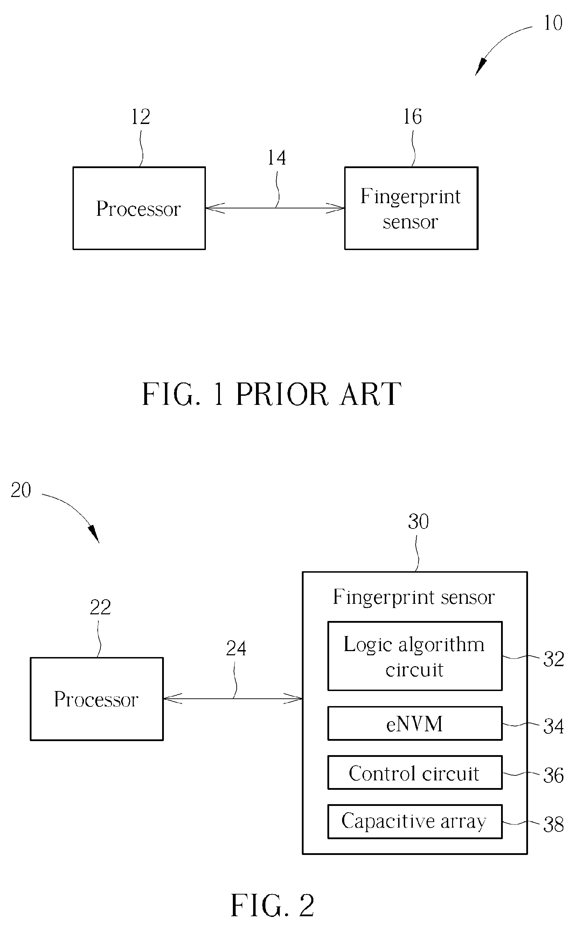

Fig. 1 is a functional block diagram showing a system 10 for processing fingerprints according to the prior art. The system 10 comprises a processor 12 in communication with a fingerprint sensor 16 via a transmission path 14. When fingerprint data is being transferred between the fingerprint sensor 16 and the processor 12 along the transmission path 14, the fingerprint data can be recorded using either software or hardware. Then, the next time the processor 12 requests fingerprint data from the fingerprint sensor 16 for verification, an unauthorized party only needs to transmit on the transmission path 14 exactly the same data that was recorded previously. Using this method, one can easily falsify fingerprint verification since the fingerprint data can easily be recorded along the transmission path 14. One does not even need to know the content of each data transmission between the processor 12 and the fingerprint sensor 16 in order to successfully falsify the fingerprint verification. Even if the fingerprint data was encrypted before being sent from the fingerprint sensor 16 to the processor 12, the encrypted fingerprint data can still be recorded and falsified if the encryption key is not changed frequently.

### Summary of the Invention

The present invention aims at providing a fingerprint sensor for encrypting fingerprint data dynamically with a single chip, and being able to apply other product easily with high performance efficiency.

This is achieved by a dynamic encryption type fingerprint sensor according to the claims here below. The dependent claims pertain to corresponding further developments and improvements.

As will be seen more clearly from the detailed description following below, the claimed dynamic encryption type fingerprint sensor includes a capacitive array sensing fingerprints and producing fingerprint data, an embedded non-volatile memory (eNVM) storing a one-time code (OTC) and an encryption algorithm indicator, and a logic algorithm circuit encrypting the fingerprint data produced by the capacitive array according to the OTC and the encryption algorithm indicator. The logic algorithm circuit comprises an encryption circuit comprising a plurality of logic encryption circuits selected using the encryption algorithm indicator, the encryption circuit encrypting the fingerprint data using selected logic encryption circuits of the plurality of logic encryption circuits according to the OTC. A control circuit is used for controlling operation of the capacitive array, the eNVM, and the logic algorithm circuit.

The claimed method for dynamically encrypting fingerprint data with a fingerprint sensor includes sensing fingerprints with a capacitive array of the fingerprint sensor and producing corresponding fingerprint data, receiving an encryption algorithm indicator and a one-time code (OTC), selecting one or more logic encryption circuits of a plurality of logic encryption circuits using the encryption algorithm indicator, and encrypting the fingerprint data produced by the capacitive array with the one or more selected logic encryption circuits according to the OTC.

The dynamic encryption type fingerprint sensor can produce the fingerprint data after sensing fingerprints. Then, a new OTC is generated and stored after the fingerprint data is encrypted. With the OTC can be updated automatically, the fingerprint sensor can dynamically perform the encryption of the fingerprint data, thereby leading to high convenience in conjunction with high performance efficiency.

### Brief Description of the Drawings

In the following, the invention is further illustrated by way of example, taking reference to the accompanying drawings. Thereof
Fig. 1 is a functional block diagram showing a system for processing fingerprints according to the prior art;
Fig. 2 is a functional block diagram showing a system for processing fingerprints according to the present invention;
Fig. 3 is a functional block diagram showing details of the logic algorithm circuit of the present invention;
Fig. 4 is a functional block diagram showing details of the eNVM of the present invention; and
Fig. 5 is a flowchart describing the method of encrypting fingerprint data using the fingerprint sensor of the present invention.

### Detailed Description

The present invention seeks to encrypt fingerprint data in a manner that provides solid protection and prevents the encrypted fingerprint data from being viewed by unauthorized parties.

Fig. 2 is a functional block diagram showing a system 20 for processing fingerprints according to the present invention. The system 20 comprises a processor 22 in communication with a fingerprint sensor 30 via a transmission path 24. The fingerprint sensor 30 comprises a logic algorithm circuit 32, an embedded non-volatile memory (eNVM) 34, a control circuit 36 for controlling operation of the fingerprint sensor 30, and a capacitive array 38 for sensing fingerprints and producing fingerprint data. The fingerprint data produced by the capacitive array 38 will vary depending on where the fingerprint is located on the capacitive array 38.

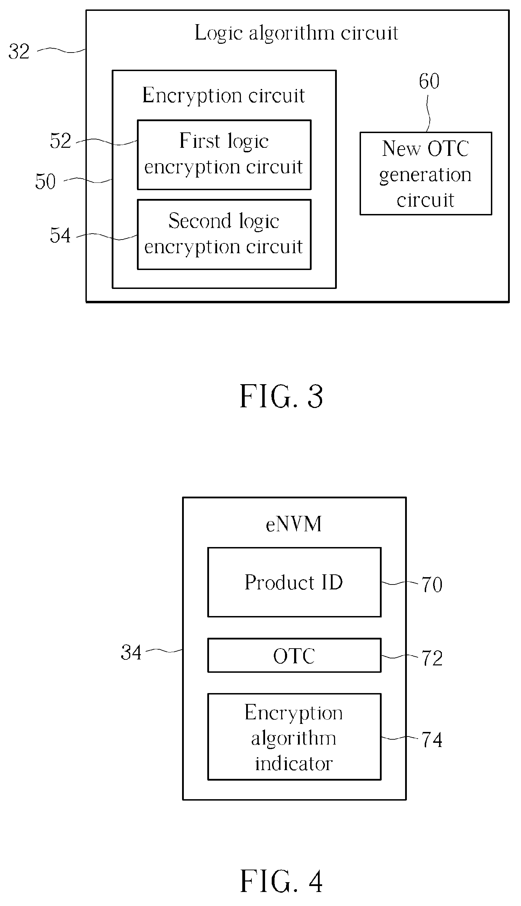

Fig. 3 is a functional block diagram showing details of the logic algorithm circuit 32 of the present invention. The logic algorithm circuit 32 comprises both an encryption circuit 50 and a new one-time code (OTC) generation circuit 60. The encryption circuit 50 comprises a plurality of logic encryption circuits including a first logic encryption circuit 52 and a second logic encryption circuit 54. The number of logic encryption circuits 52, 54 included in the encryption circuit 50 should be at least two, and may contain any number of logic encryption circuits 52, 54 greater than two. One or a combination of multiple logic encryption circuits 52, 54 may be used for encrypting fingerprint data, as will be explained in greater detail below. The new OTC generation circuit 60 is used for generating an initial OTC and for generating an updated OTC after a previous OTC has been used. The logic algorithm circuit 32 can be built using simple logic gates, and does not need to be a general purpose processor or MCU.

Fig. 4 is a functional block diagram showing details of the eNVM 34 of the present invention. The eNVM 34 stores a product identification 70 for identifying the particular model of the fingerprint sensor 30, stores the OTC 72, and stores an encryption algorithm indicator 74. The encryption algorithm indicator 74 is used for indicating which of the logic encryption circuits 52, 54 should be used for encrypting the fingerprint sensor 30 while using the OTC 72 as a key for the encryption. The encryption algorithm indicator 74 may indicate that the first logic encryption circuit 52, the second logic encryption circuit 54, or a combination of the first logic encryption circuit 52 and second logic encryption circuit 54 should be used for encrypting the fingerprint data. If more than two logic encryption circuits are contained in the encryption circuit 50, then there will be more possibilities for the logic encryption circuits that can be used for encrypting the fingerprint data.

Please note that the processor 22 will also need to store its own identical copy of both the OTC 72 and the encryption algorithm indicator 74 that are stored in the eNVM 34. That is, in order for the processor 22 to be able to decrypt the encrypted fingerprint data received from the fingerprint sensor 30 along the transmission path 24, the processor 22 will need to have the same OTC 72 and encryption algorithm indicator 74 for being able to successfully perform decryption. In an embodiment, the processor can provide the OTC 72 to the fingerprint sensor 30 instead of the new OTC generation circuit 60 being used for generating a new OTC 72 to replace the previous OTC 72. The OTC 72 can either be encrypted or non-encrypted when it is stored in the eNVM 34 or when it is received from the processor 22.

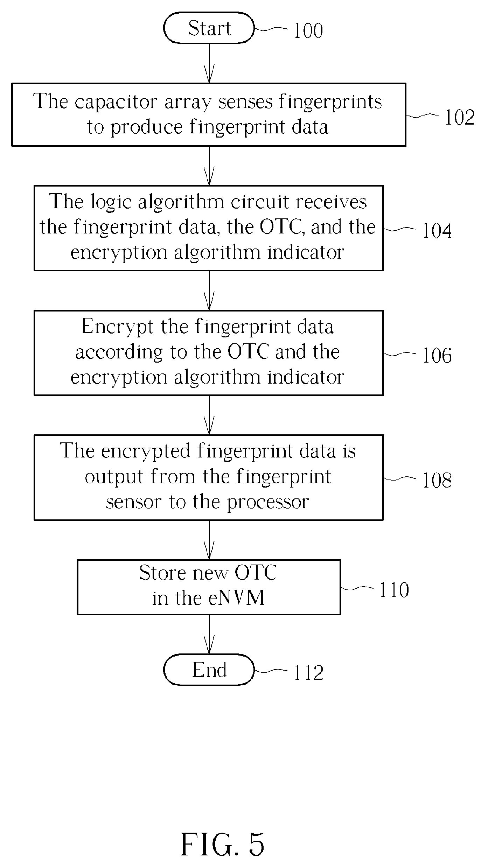

Fig. 5 is a flowchart describing the method of encrypting fingerprint data using the fingerprint sensor 30 of the present invention. Steps in the flowchart will be explained as follows.
Step 100: Start.
Step 102: The capacitive array 38 of the fingerprint sensor 30 senses fingerprints to produce fingerprint data.
Step 104: The capacitive array 38 supplies the fingerprint data to the logic algorithm circuit 32, and the eNVM 34 supplies both the OTC 72 and the encryption algorithm indicator 74 to the logic algorithm circuit 32.
Step 106: The encryption circuit 50 of the logic algorithm circuit 32 encrypts the fingerprint data according to the OTC 72 and the encryption algorithm indicator 74. The encryption circuit 50 selects one or more logic encryption circuits 52, 54 according to the encryption algorithm indicator 74 and uses the selected logic encryption circuits 52, 54 for encrypting the fingerprint data according to the OTC 72.
Step 108: The encrypted fingerprint data is output from the fingerprint sensor 30 to the processor 22 via the transmission path 24.
Step 110: A new OTC 72 is generated using the new OTC generation circuit 60 or is received from the processor 22, and the new OTC 72 is stored in the eNVM 34. The OTC 72 is only used once, so after the OTC 72 is used for encrypting fingerprint data, a new OTC 72 is stored in the eNVM 34. If the new OTC generation circuit 60 is used for generating the OTC 72, the new OTC generation circuit 60 can generate the new OTC 72 randomly or based on a previous value of the OTC 72. For example, if the new OTC 72 is generated based on a previous value of the OTC 72, the previous value of the OTC 72 can be altered using simple logic operations in order to create the new OTC 72. Meanwhile, the processor 22 will create the same new OTC 72 that is created by the new OTC generation circuit 60.
Step 112: End.

The encryption algorithm indicator 74 stored in the eNVM 34 can be updated as often as desired. The update can take place periodically, such as every week or every day, or can take place after each time the logic algorithm circuit 32 is used for encrypting fingerprint data. When the encryption algorithm indicator 74 is updated, the processor 22 sends the updated encryption algorithm indicator 74 to the fingerprint sensor 30, and the updated encryption algorithm indicator 74 is stored in the eNVM 34.

Since the processor 22 maintains a copy of the same OTC 72 and encryption algorithm indicator 74 that are used in the fingerprint sensor 30, the processor 22 is able to successfully decrypt the encrypted fingerprint data that the processor 22 receives from the fingerprint sensor 30 in order to verify the fingerprint data. The encryption algorithm indicator 74 will indicate to the processor 22 which of the logic encryption circuits 52, 54 were used for encrypting the fingerprint data. The processor 22 does not necessarily need to have its own logic encryption circuits 52, 54 since the processor 22 can be a general purpose processor capable of executing a variety of varying and complex instructions. The processor 22 is able to perform the same logic operations as the logic encryption circuits 52, 54 in reverse for decrypting the encrypted fingerprint data.

In summary, the present invention provides a way to dynamically select an encryption type that is used to encrypt fingerprint data using the OTC 72. Since the OTC 72 is only used a single time, this makes it harder for an unauthorized party to decrypt the fingerprint data. Also, dynamically selecting the logic encryption circuits 52, 54 using the encryption algorithm indicator 74 for performing the encryption also adds a second layer of protection. One would have to know both the OTC 72 and the selected logic encryption circuits 52, 54 that were used for encrypting the fingerprint data in order to decrypt the corresponding encrypted fingerprint data. Furthermore, the fingerprint sensor 30 can be formed on a single chip, making it simple for product manufacturers to take advantage of the dynamic encryption functions of the fingerprint sensor 30 when designing products that make use of the fingerprint sensor 30.

## Claims

1. A dynamic encryption type fingerprint sensor (30), **characterized by** comprising:
a capacitive array (38) sensing fingerprints and producing fingerprint data;
an embedded non-volatile memory (eNVM) (34) storing a one-time code (OTC) (72) and an encryption algorithm indicator (74);
a logic algorithm circuit (32) encrypting the fingerprint data produced by the capacitive array (38) according to the OTC (72) and the encryption algorithm indicator (74), the logic algorithm circuit (32) comprising:
an encryption circuit (50) comprising a plurality of logic encryption circuits (52, 54) selected using the encryption algorithm indicator (74), the encryption circuit (50) encrypting the fingerprint data using selected logic encryption circuits (32) of the plurality of logic encryption circuits according to the OTC (72); and
a control circuit (36) for controlling operation of the capacitive array (38), the eNVM (34), and the logic algorithm circuit (32).

2. The dynamic encryption type fingerprint sensor (30) of claim 1, **characterized in that** one or more of the plurality of logic encryption circuits (32) is selected using the encryption algorithm indicator (74), and the one or more selected logic encryption circuits (32) encrypt the fingerprint data according to the OTC (72).

3. The dynamic encryption type fingerprint sensor (30) of claim 1, **characterized in that** the encryption algorithm indicator (74) is updated periodically, and an updated encryption algorithm indicator (74) is stored in the eNVM (34).

4. The dynamic encryption type fingerprint sensor (30) of claim 1, **characterized in that** the encryption algorithm indicator (74) is updated after every time the logic algorithm circuit (32) is used for encrypting fingerprint data, and an updated encryption algorithm (74) indicator is stored in the eNVM (34).

5. The dynamic encryption type fingerprint sensor (30) of claim 1, **characterized in that** the OTC (72) is encrypted.

6. The dynamic encryption type fingerprint sensor (30) of claim 1, **characterized in that** the OTC (72) is received from outside the dynamic encryption type fingerprint sensor (30).

7. The dynamic encryption type fingerprint sensor (30) of claim 1, **characterized in that** the logic algorithm circuit (32) further comprises a new OTC generation circuit (60) for generating a new OTC after the OTC (72) has been used for encrypting fingerprint data.

8. The dynamic encryption type fingerprint sensor (30) of claim 7, **characterized in that** the new OTC is generated randomly or generated based on a previous value of the OTC (72).

9. The dynamic encryption type fingerprint sensor (30) of claim 1, **characterized in that** the dynamic encryption type fingerprint sensor (30) is formed on a single chip.

10. The dynamic encryption type fingerprint sensor (30) of claim 1, **characterized in that** the eNVM (34) further stores a product identification (70) of the dynamic encryption type fingerprint sensor (30) to identify the dynamic encryption type fingerprint sensor (30).

11. A method of dynamically encrypting fingerprint data with a fingerprint sensor (30), the method **characterized by** comprising:
sensing fingerprints with a capacitive array (38) of the fingerprint sensor (30) and producing corresponding fingerprint data;
receiving an encryption algorithm indicator (74) and a one-time code (OTC) (72);
selecting one or more logic encryption circuits (52,54) of a plurality of logic encryption circuits using the encryption algorithm indicator (74); and
encrypting the fingerprint data produced by the capacitive array (38) with the one or more selected logic encryption circuits (52,54) according to the OTC (72).

12. The method of claim 11, **characterized in that** the OTC (72) and the encryption algorithm indicator (74) are stored in an embedded non-volatile memory (eNVM) (34) of the fingerprint sensor.

13. The method of claim 12, **characterized in that** the encryption algorithm indicator (74) is updated periodically, and an updated encryption algorithm indicator (74) is stored in the eNVM (34).

14. The method of claim 12, **characterized in that** the encryption algorithm indicator (74) is updated after every time the logic algorithm circuit (32) is used for encrypting fingerprint data, and an updated encryption algorithm indicator (74) is stored in the eNVM (34).

15. The method of claim 12, **characterized in that** the eNVM (34) further stores a product identification (70) of the fingerprint sensor (30) to identify the fingerprint sensor (30).

16. The method of claim 11, **characterized in that** the OTC (72) is encrypted.

17. The method of claim 11, **characterized in that** the OTC (72) is received from outside the fingerprint sensor (30).

18. The method of claim 11, **characterized by** further comprising generating a new OTC after the OTC (72) has been used for encrypting fingerprint data.

19. The method of claim 18, **characterized in that** the new OTC is generated randomly or generated based on a previous value of the OTC (72).

20. The method of claim 11, **characterized in that** the fingerprint sensor (30) is formed on a single chip.
